# EUROPÄISCHE PATENTSCHRIFT

(11) **EP 4 489 961 B1**
(45) Veröffentlichungstag und Bekanntmachung des Hinweises auf die Patenterteilung: **17.12.2025**
(21) Anmeldenummer: 23710299.1
(22) Anmeldetag: 08.03.2023
(51) Int. Cl.: B29C 70/52, B29C 64/314, B29C 64/118, B29C 70/38

(54) **VORRICHTUNG UND VERFAHREN ZUR HERSTELLUNG VON FILAMENTEN**
DEVICE AND METHOD FOR PRODUCING FILAMENTS
DISPOSITIF ET PROCÉDÉ DE PRODUCTION DE FILAMENTS

(30) Priorität: 09.03.2022 DE 102022202353
(43) Veröffentlichungstag der Anmeldung: 15.01.2025
(73) Patentinhaber: Fraunhofer-Gesellschaft zur Förderung der angewandten Forschung e.V., 80686 München (DE)
(72) Erfinder: HIRSCH, Patrick, 06120 Halle (Saale) (DE); SCHLIMPER, Ralf, 06120 Halle (Saale) (DE); SCHÄUBLE, Ralf, 06120 Halle (Saale) (DE); GLATZ, Dietmar, 04179 Leipzig (DE); HEUBACH, Stefan, 04177 Leipzig (DE)
(74) Vertreter: Friese Goeden Patentanwälte PartGmbB
(86) Internationale Anmeldenummer: PCT/EP2023/055820
(87) Internationale Veröffentlichungsnummer: WO 2023/170110

(56) Entgegenhaltungen:
- EP-A1- 3 888 879
- WO-A2-2014/153535
- CN-A- 106 626 447
- US-A- 6 090 319

## Beschreibung

Die Erfindung betrifft eine Vorrichtung zur Herstellung von Filamenten mit vorgebbarem Querschnitt, welche zumindest eine Faserverstärkung und eine thermoplastische Matrix enthalten. Weiterhin betrifft die Erfindung ein Verfahren zur Herstellung solcher Filamente.

Aus der DE 10 2016 201 153 A1 ist ein Imprägnierwerkzeug zur Fertigung von thermoplastischen Faserverbundwerkstoffen bzw. UD-Tapes bekannt. Diese bekannte Vorrichtung dient dazu, aus einem trockenen Faserbündel durch Schmelz-Direktimprägnierung einen Faserverbundwerkstoff zu erzeugen, welcher eine Faserverstärkung aus Endlosfasern und Matrixkunststoff enthält und möglichst keine Trockenstellen innerhalb des Faserverbundwerkstoffes aufweist. Der solchermaßen hergestellte Faserverbundwerkstoff bzw. das UD-Tape kann sodann bei der Herstellung eines Bauteiles mittels 3D-Kunststoffdruck zur Erhöhung der mechanischen Festigkeit in das Bauteil eingebettet werden.

Die bekannte Vorrichtung hat den Nachteil, dass die solchermaßen hergestellten Faserverbundwerkstoffe bzw. UD-Tapes eine vergleichsweise geringe Dicke bei vergleichsweise großer Breite aufweisen. Der Querschnitt ist somit im Wesentlichen rechteckig, sodass die Faserverstärkung nur schwer in filigrane Bauteile integriert werden kann und beim Ablegen während des Drucks die möglichen Biegerichtungen beschränkt sind.

Die EP 3 888 879 A1 offenbart einen Extrusionskopf für die Herstellung kontinuierlicher verschmolzener Filamente. Der Extrusionskopf weist einen formverändernden Kanal mit einem Einlass (7) mit rechteckigem Querschnitt, einem Auslass (6) mit nicht rechteckigem Querschnitt und einer Vielzahl von unterschiedlichen aufeinanderfolgenden Übergangsinnenquerschnitten auf. Diese sind so konfiguriert und angeordnet, dass sie ein kontinuierliches Filament während des Durchgangs schrittweise dazu zwingen, seinen Querschnitt zu ändern.

Aus der WO 2014/153535 A2 ist ein 3D-Drucker bekannt. Dieser kann ein hohlraumfreies, verstärktes Filament verarbeiten, welches in eine Extrusionsdüse eingeführt wird. Das verstärkte Filament wird auf eine Temperatur erhitzt, die höher ist als die Schmelztemperatur des Matrixmaterials und niedriger als die Schmelztemperatur des Kerns, bevor das Filament aus der Extrusionsdüse extrudiert wird.

Aus der CN 106626447 A ist eine Pultrusionsvorrichtung bekannt. Die Pultrusionsvorrichtung umfasst eine Abwickelvorrichtung, eine Pultrusionsbox, eine Spannbox, eine Kühlvorrichtung, eine Zieheinheit und eine Aufwickelvorrichtung, die entsprechend der Abfolge des Pultrusionsprozesses nacheinander angeordnet sind.

Die US 6,090,319 offenbart ein Verfahren zur kontinuierlichen Herstellung einer beschichteten, langfaserverstärkenden Verbundstruktur, die zur Herstellung geformter Gegenstände geeignet ist. Das Verfahren ist dadurch gekennzeichnet, dass eine Vielzahl von kontinuierlichen Längen von verstärkenden Fasersträngen mit einem ersten thermoplastischen Harzmaterial imprägniert wird, während die Faserstränge kontinuierlich gezogen werden, um eine langfaserige verstärkende Verbundstruktur zu erzeugen. Anschließend wird die langfaserige verstärkende Verbundstruktur mit einem zweiten thermoplastischen Harzmaterial beschichtet. Die nach dem Verfahren hergestellte Verbundstruktur eignet sich zur Herstellung von Formkörpern mit guten physikalischen und chemischen Eigenschaften.

Ausgehend vom Stand der Technik liegt der Erfindung somit die Aufgabe zugrunde, eine Vorrichtung und ein Verfahren zum Herstellen von Filamenten anzugeben, welche im 3D-Druck als Faserverstärkung einfach und zuverlässig eingebettet werden können.

Die Aufgabe wird erfindungsgemäß durch eine Vorrichtung gemäß Anspruch 1 und ein Verfahren nach Anspruch 9 gelöst. Vorteilhafte Weiterbildungen der Erfindung finden sich in den Unteransprüchen.

Erfindungsgemäß wird eine Vorrichtung zur Herstellung von Filamenten mit vorgebbarem Querschnitt vorgeschlagen. Die Filamente können einen polygonalen oder runden oder im Einzelfall auch ovalen Querschnitt aufweisen. Ein polygonaler Querschnitt ist bevorzugt, aber nicht zwingend, quadratisch, dreieckig, fünfeckig, sechseckig oder achteckig. In einigen Ausführungsformen ist der Querschnitt des Filamentes rund, sodass dieses ohne eine Vorzugsrichtung zu besitzen in einfacher Weise im 3D-Druck verarbeitet werden kann, entweder unmittelbar durch die Extruderdüse, mittels welcher flüssiger Kunststoff im 3D-Druck auf das herzustellende Bauteil aufgetragen wird, oder aber über eine separate Faserzufuhreinrichtung, welche das erfindungsgemäße Filament in vorgebbaren Bereichen des herzustellenden Bauteils ablegt, sodass dieses in den flüssigen Kunststoff eingebettet werden kann.

Das erfindungsgemäß herzustellende Filament enthält zumindest eine Faserverstärkung, welche ausgewählt sein kann aus Glasfasern und/oder Aramidfasern und/oder Kohlefasern und/oder Basaltfasern. Darüber hinaus enthält das herzustellende Filament eine thermoplastische Matrix, welche die Faserverstärkung möglichst vollständig benetzt, ohne dass Lunker bzw. Trockenstellen entstehen, welche den Kraftübertrag zwischen Matrix und Faserverstärkung unterbrechen und dadurch die Festigkeit eines solchermaßen hergestellten Bauteiles negativ beeinflussen. Die thermoplastische Matrix kann in einigen Ausführungsformen der Erfindung ausgewählt sein aus Polystyrol, Acrylnitril-Butadien-Styrol-Copolymer, Polyvinylchlorid, Polyethylen, Polypropylen, Polymethylmetacrylat, Polyoxymethylen, Polyethylenterephthalat oder Polyethersulfon. Selbstverständlich ist die Erfindung nicht auf die vorstehenden Beispiele beschränkt. Der Fachmann wird fallweise auch andere Polymere und/oder andere Faserwerkstoffe in Betracht ziehen. Der Faservolumenanteil des erfindungsgemäß herzustellenden Filamentes kann mehr als 40 % oder mehr als 50 % oder mehr als 60 % betragen.

Erfindungsgemäß wird vorgeschlagen, aus Endlosfasern und Matrixkunststoff durch Imprägnieren des Faserbündels ein flaches UD-Tape herzustellen, welches beispielsweise eine Dicke von weniger als 500 µm oder weniger als 400 µm oder weniger als 250 µm oder weniger als 150 µm oder weniger als 100 µm aufweist. Das UD-Tape kann eine Dicke von mehr als 25 µm oder mehr als 50 µm odermehr als 75 µm haben. Die Breite dieses UD-Tapes kann zwischen etwa 0,5 mm und etwa 10 mm oder zwischen etwa 1 mm und etwa 4 mm oder etwa 3 mm betragen. Die Herstellung des UD-Tapes erfolgt in an sich bekannter Weise durch Schmelzimprägnierung, beispielsweise wie in der DE 10 2016 201 153 A1 erläutert.

Erfindungsgemäß wird sodann vorgeschlagen, das UD-Tape mit rechteckigem Querschnitt in ein Filament mit rundem oder polygonalem Querschnitt umzuformen, sodass das Dicken-zu-Breiten-Verhältnis zwischen etwa 2:1 bis 1:2 beträgt. In einigen Ausführungsformen der Erfindung kann das Verhältnis von Dicke und Breite des Filamentes etwa 1:1 betragen, d. h. der Querschnitt ist rund oder gleichförmig polygonal, beispielsweise quadratisch. Nachfolgend wird die Erfindung am Beispiel eines rechteckigen UD-Tapes erläutert, welches zu einem runden Filament umgeformt wird. Dieses Beispiel dient jedoch nur der Erläuterung der Erfindung und soll andere Querschnitte des Filamentes nicht ausschließen.

Erfindungsgemäß wird das UD-Tape zum Filament umgeformt, indem das UD-Tape durch eine Mehrzahl von Düsen transportiert wird, sodass das UD-Tape einen Außenquerschnitt annimmt, welcher komplementär zum Innenquerschnitt der Düsen geformt ist. Die Düsen können dabei sowohl eine Umformung als auch eine Nachverdichtung und/oder eine Glättung bewirken, sodass durch die Umformung des breiten UD-Tapes zu einem runden Filament keine Lunker oder Blasen eingearbeitet werden, welche die Festigkeit eines mit dem Filament hergestellten Bauteiles nachteilig beeinflussen würden.

Erfindungsgemäß wird das UD-Tape zunächst einer ersten Düse zugeführt, welche einen ersten Querschnitt aufweist und mit einer zugeordneten ersten Heizeinrichtung versehen ist. Die Heizeinrichtung kann dazu eingerichtet sein, die Düse auf eine Temperatur zu erwärmen, welche der Umformtemperatur des für das UD-Tape verwendeten Polymers entspricht. In anderen Ausführungsformen der Erfindung kann die Düse auf eine Temperatur erwärmt werden, welche der Erweichungstemperatur bzw. der Glasübergangstemperatur des Polymers entspricht. In wiederum anderen Ausführungsformen der Erfindung kann die Heizeinrichtung dazu eingerichtet sein, die Düse auf eine Temperatur zu erwärmen, welche dem Kristallschmelzbereich des verwendeten Polymers entspricht bzw. aus diesem Bereich gewählt ist.

Die Heizeinrichtung kann in einigen Ausführungsformen der Erfindung eine elektrische Heizeinrichtung sein. In anderen Ausführungsformen der Erfindung kann die Heizeinrichtung zumindest einen Fluidkanal umfassen, welcher mit einem flüssigen oder gasförmigen Wärmeträgermedium durchströmbar ist und auf diese Weise Wärme an die Düse abgibt.

Die Heizeinrichtung kann optional eine Steuer- und/oder Regeleinrichtung enthalten, mit welcher die Temperatur der Düse innerhalb vorgebbarer Grenzen konstant gehalten werden kann.

Nachdem das UD-Tape die erste Düse durchlaufen hat, tritt das so erhaltene Rohfilament in zumindest eine zweite Düse ein. Die zweite Düse weist einen zweiten Querschnitt auf und ist mit einer zugeordneten zweiten Heizeinrichtung versehen. Bauweise und erreichbare Temperaturen der zweiten Heizeinrichtung können in einigen Ausführungsformen der Erfindung im Wesentlichen den möglichen Bauformen und/oder den erreichbaren Temperaturen der ersten Heizeinrichtung entsprechen, wie vorstehend beschrieben. Es ist jedoch darauf hinzuweisen, dass die gewählten Temperaturen sämtlicher Düsen nicht identisch sein müssen und die Heizeinrichtungen unterschiedlicher Düsen eine unterschiedliche Bauform aufweisen können. Die Erfindung lehrt nicht zwingend die Verwendung identischer Heizeinrichtungen oder die Verwendung identischer Temperaturen aller Düsen als Lösungsprinzip.

Nach dem Durchlaufen der zweiten Düse kann das so hergestellte Filament auf eine Vorratstrommel aufgespult und bis zur weiteren Verwendung gelagert werden. In anderen Ausführungsformen der Erfindung kann das Filament nach Durchlaufen der zweiten Düse noch weitere Düsen und/oder zumindest eine Beschichtungsstation durchlaufen.

Zum Transport des UD-Tapes bzw. des Filamentes durch die Düsen der Vorrichtung steht erfindungsgemäß eine Transporteinrichtung zur Verfügung, welche die zum Transport des Filamentes erforderliche Zugkraft auf das Filament aufbringt. Die Transporteinrichtung kann das Filament elektrisch oder schwerkraftgetrieben durch die Düsen transportieren. In einigen Ausführungsformen der Erfindung kann zur Erzeugung der Zugkraft zumindest eine Transportkette und/oder zumindest ein Antriebsrad seitlich am Filament angreifen. In anderen Ausführungsformen der Erfindung kann das Filament auf eine Vorratstrommel aufgespult werden, welche gleichzeitig die erforderliche Zugkraft ausübt. Eine solche Ausführungsform der Transporteinrichtung kann besonders schonend sein, sodass die Außenfläche des Filamentes durch das Einleiten der Transportkräfte nicht beschädigt wird.

In einigen Ausführungsformen der Erfindung kann die Querschnittsfläche der ersten Düse größer sein als die Querschnittsfläche der zweiten Düse. Hierdurch kann die erste Düse das initiale Umformen des breiten UD-Tapes zum runden Filament einleiten. Die zweite Düse kann der Nachverdichtung dienen und die Lunkerfreiheit des Filamentes sicherstellen.

In einigen Ausführungsformen der Erfindung kann zumindest eine Düse, beispielsweise die erste Düse, einen konischen Querschnittsverlauf aufweisen. Durch die allmähliche Verringerung des Querschnittes entlang der Längserstreckung der Düse kann die Umformung des breiten UD-Tapes zu einem runden Filament erleichtert sein, indem das UD-Tape in der Düse aufgerollt wird.

In einigen Ausführungsformen der Erfindung kann zumindest eine Düse einen abgerundeten Einlauf aufweisen. Ein solcher Einlauf vermeidet das Abstreifen von Material an scharfen Kanten, sodass das UD-Tape beim Durchlauf nicht beschädigt wird.

Erfindungsgemäß enthält die Vorrichtung zumindest eine Kühleinrichtung, welche zwischen zwei Düsen angeordnet ist und welche dazu eingerichtet ist, Wärme aus dem Filament abzuführen. Dies führt zur Verfestigung der Matrix des Filamentes. In einigen Ausführungsformen der Erfindung kann nach jeder Düse einer Mehrzahl von Düsen eine Kühleinrichtung angeordnet sein. In einigen Ausführungsformen der Erfindung befindet sich lediglich eine Kühleinrichtung nach Durchlauf der letzten Düse innerhalb der Vorrichtung, sodass das Polymer verfestigt werden kann, ehe es auf einer Vorratstrommel aufgespult wird.

In einigen Ausführungsformen der Erfindung enthält die Vorrichtung zumindest eine weitere Düse mit einer zugeordneten weiteren Heizeinrichtung, welche in Transportrichtung des Filamentes gesehen hinter der zweiten Düse angeordnet ist. In einigen Ausführungsformen der Erfindung kann die Vorrichtung somit zwischen drei und sieben oder zwischen vier und sechs Düsen enthalten. Eine Mehrzahl von Düsen kann zu einer besseren Verdichtung des Filamentes und damit zu einer höheren mechanischen Festigkeit eines mit dem Filament hergestelltes Bauteiles führen. Darüber hinaus können die weiteren Düsen dazu dienen, die Oberfläche des Filamentes zu glätten, um so die Verarbeitkeit im 3D-Druck zu verbessern.

In einigen Ausführungsformen der Erfindung kann die Vorrichtung eine Beschichtungseinrichtung enthalten, welche eine Eintrittsdüse, eine Beschichtungskammer und eine Austrittsdüse enthält und welche dazu eingerichtet sind, vom Filament der Reihe nach durchlaufen zu werden. In einigen Ausführungsformen der Erfindung kann die Querschnittsfläche der Beschichtungskammer größer sein als die Querschnittsfläche der Ein- und Austrittsdüsen. Die Beschichtungseinrichtung kann weiterhin eine Polymerzufuhreinrichtung enthalten, welche dazu eingerichtet ist, der Beschichtungskammer ein erwärmtes Polymer zuzuführen. Hierdurch kann das Filament mit einem Polymermantel versehen werden. Dieser Polymermantel kann etwaige Faserreste auf der Oberfläche des Filamentes umhüllen und zusätzliches Matrixmaterial für den späteren 3D-Druck bereitstellen. Hierdurch kann die Klebewirkung des Filamentes erhöht und damit die Verarbeitbarkeit verbessert werden.

In einigen Ausführungsformen der Erfindung kann die Austrittsdüse der Beschichtungseinrichtung mit einer Wärmesenke verbunden sein. In einigen Ausführungsformen der Erfindung kann die Wärmesenke ein Kühlkörper sein oder einen Kühlkörper enthalten, welcher Wärme an ein gasförmiges oder flüssiges Wärmeträgermedium abgeben kann. Hierdurch wird der in der Beschichtungseinrichtung aufgebrachte Polymermantel an der Austrittsdüse der Beschichtungseinrichtung gleichmäßig abgekühlt und verfestigt, sodass die Oberflächenqualität erhöht sein kann und eine gleichmäßigere Schichtdicke erzielt wird.

In einigen Ausführungsformen der Erfindung kann die Wärmesenke aktiv gekühlt werden, beispielsweise durch ein Peltier-Element oder eine Fördereinrichtung, welche eine aktive Strömung eines gasförmigen oder flüssigen Wärmeträgermediums bereitstellt. Hierdurch kann der Temperaturverlauf entlang der Austrittsdüse genauer kontrolliert werden.

In einigen Ausführungsformen der Erfindung können die Heizeinrichtungen der jeweiligen Düsen dazu eingerichtet sein, die Düsen auf eine Temperatur von etwa 90°C bis etwa 300°C zu erwärmen. In anderen Ausführungsformen der Erfindung können die Heizeinrichtungen dazu eingerichtet sein, die Düsen auf eine Temperatur von etwa 120°C bis etwa 270°C zu erwärmen. In einigen Ausführungsformen der Erfindung können die Heizeinrichtungen dazu eingerichtet sein, die Düsen auf eine Temperatur von etwa 120°C bis etwa 150°C zu erwärmen. In einigen Ausführungsformen der Erfindung können die Heizeinrichtungen dazu eingerichtet sein, die Düsen auf eine Temperatur von etwa 140°C bis etwa 170°C zu erwärmen. In einigen Ausführungsformen der Erfindung können die Heizeinrichtungen dazu eingerichtet sein, die Düsen auf eine Temperatur von etwa 230°C bis etwa 280°C zu erwärmen. In einigen Ausführungsformen der Erfindung können die Heizeinrichtungen dazu eingerichtet sein, die Düsen auf eine Temperatur von etwa 80°C bis etwa 120°C zu erwärmen. Die Temperaturen können in Abhängigkeit des für die thermoplastische Matrix des Filamentes verwendeten Kunststoffes gewählt sein, sodass eine hinreichende Umformbarkeit des Filamentes gegeben ist.

Nachfolgend soll die Erfindung anhand von Figuren und Ausführungsbeispielen ohne Beschränkung des allgemeinen Erfindungsgedankens näher erläutert werden. Dabei zeigt
Figur 1 eine schematische Darstellung der erfindungsgemäßen Vorrichtung.
Figur 2 zeigt eine Abfolge von sechs Düsen und einer Beschichtungseinrichtung zur Herstellung von Filamenten.
Figur 3 zeigt eine alternative Ausführungsform einer ersten Düse.
Figur 4 zeigt Filamente, welche erfindungsgemäß hergestellt wurden, im Schnitt.

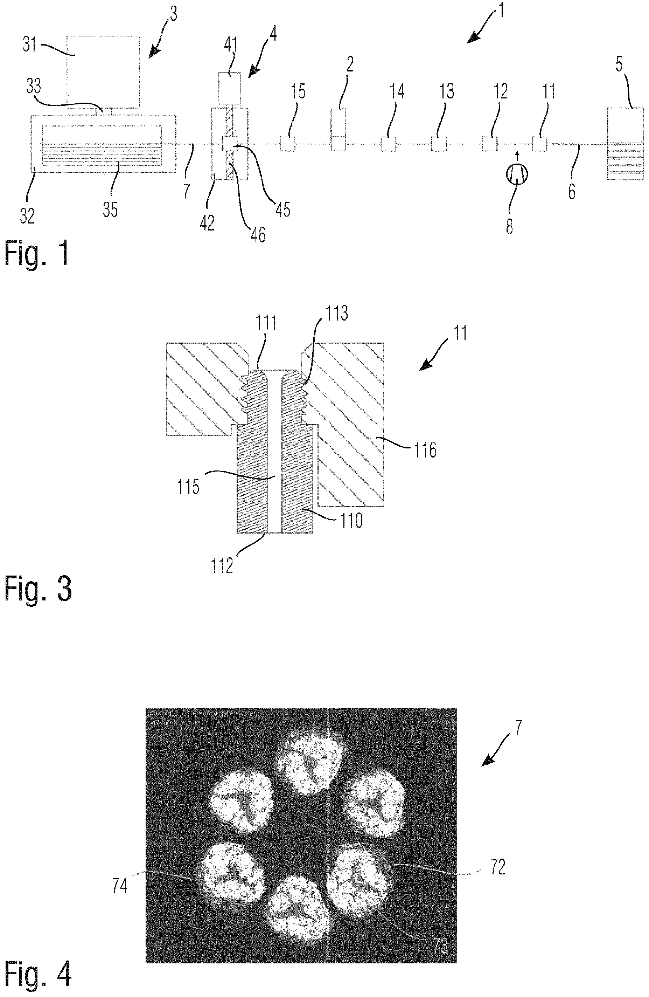

Figur 1 zeigt schematisch den Aufbau einer erfindungsgemäßen Vorrichtung in einer ersten Ausführungsform. Das UD-Tape 6 durchläuft die Vorrichtung von rechts nach links und wird dabei zum Filament 7 umgeformt.

Rechts befindet sich eine Vorratstrommel 5, auf welcher ein UD-Tape 6 aufgerollt ist. Das UD-Tape im Sinne der vorliegenden Erfindung ist ein unidirektional-faserverstärktes Halbzeug, welches eine Faserverstärkung aus einer Endlosfaser und eine thermoplastische Matrix enthält. Die Herstellung dieser UD-Tapes ist dem Fachmann an sich geläufig und kann über verschiedene Verfahren erfolgen, beispielsweise Schmelzimprägnierung, Pulverimprägnierung oder Folienimprägnierung der Endlosfasern. Das UD-Tape weist einen in etwa rechteckigen Querschnitt auf. Typisch ist eine Breite zwischen etwa 0,5 mm und etwa 10 mm oder zwischen etwa 1 mm und etwa 4 mm oder etwa 3 mm bei einer Dicke von weniger als 500 µm oder weniger als 400 µm oder weniger als 250 µm oder weniger als 150 µm oder weniger als 100 µm. Das UD-Tape kann eine Dicke von mehr als 25 µm oder mehr als 50 µm oder mehr als 75 µm haben. Der Faservolumenanteil kann zwischen etwa 20 % und etwa 50 % betragen.

Die zur Verstärkung eingesetzten Endlosfasern können ausgewählt sein aus Glasfasern und/oder Carbonfasern und/oder Basaltfasern und/oder Aramidfasern und/oder Naturfasern und/oder Polymerfasern. Das Matrixpolymer kann in einigen Ausführungsformen der Erfindung ausgewählt sein aus Polyethylen oder Polypropylen oder Polyamid. Die Erfindung lehrt jedoch nicht die Verwendung eines bestimmten UD-Tapes als Lösungsprinzip.

Die Vorrichtung weist eine erste Düse 11, eine zweite Düse 12, und optional eine dritte Düse 13 und eine vierte Düse 14 auf, welche vom flächigen UD-Tape der Reihe nach durchlaufen werden, um auf diese Weise ein faserverstärktes Filament mit einem Breiten-zu-Dicken-Verhältnis von etwa 1:1 zu erzeugen. Hierzu wird das UD-Tape in der ersten Düse 11 aufgerollt, um einen etwa runden Querschnitt zu erzeugen. In den nachfolgenden zweiten, dritten und vierten Düsen 12, 13 und 14 wird das Filament nachverdichtet, sodass ein möglichst lunkerfreier Aufbau erhalten wird.

Nach der vierten Düse 14 durchläuft das Filament eine optionale Beschichtungseinrichtung, welche das Filament mit einem Polymermantel umhüllt. Dieser Polymermantel kann etwaige Faserreste auf der Oberfläche der Filamentes einbetten und zusätzliches Matrixmaterial für den späteren 3D-Druck unter Verwendung des Filamentes bereitstellen. Hierdurch kann die Klebewirkung im Matrixmaterial des zu druckenden Bauteils erhöht sein, sodass eine verbesserte Kraftübertragung auf die Faserverstärkung ermöglicht werden kann.

Nach der optionalen Beschichtungseinrichtung 2 kann eine optionale fünfte Düse 15 angeordnet sein, welche der Nachverdichtung und Glättung des im vorherigen Verfahrensschritt aufgebrachten Polymermantels dienen kann.

Nach Herstellung des Filamentes 7 kann dieses auf eine Vorratsspule 35 aufgewickelt werden. Hierzu wird die Vorratsspule 35 über eine Welle 33 von einem Elektromotor 31 angetrieben. Die Vorratsspule 35 kann sich in einem optionalen Gehäuse 32 befinden. Die Aufwickelstation kann gleichzeitig als Transporteinrichtung 3 dienen, welche das UD-Tape 6 bzw. das Filament 7 durch die Vorrichtung 1 transportiert und dabei umformt und beschichtet.

Um eine gleichmäßige, beschädigungsfreie Ablage des Filamentes 7 auf der Trommel 35 zu ermöglichen, kann eine optionale Spulstation 4 verwendet werden. Die Spulstation 4 ist in einem Gehäuse 42 angeordnet, welches eine Spindel 46 und eine Filamentführung 45 enthält. Durch Antrieb der Spindel 46 mit einem Elektromotor 41 kann die Filamentführung 45 vor der Trommel 35 hin- und herbewegt werden, um einen gleichmäßigen Versatz des abgelegten Filamentes 7 um jeweils etwa eine Filamentbreite pro Umdrehung zu ermöglichen. In einigen Ausführungsformen der Erfindung kann die Filamentführung 45 mit einer optionalen Heizeinrichtung versehen sein, um die Knick- oder Bruchneigung des aufzuwickelnden Filamentes während der Ablage auf der Vorratsspule 35 zu reduzieren.

An einer oder mehreren Stellen innerhalb der Vorrichtung 1 kann sich eine optionale Kühleinrichtung 8 befinden, welche dazu eingerichtet ist, Wärme aus dem Filament 7 auszutragen. Im dargestellten Ausführungsbeispiel befindet sich eine Kühleinrichtung 8 zwischen der ersten Düse 11 und der zweiten Düse 12. Die Kühleinrichtung 8 kann in anderen Ausführungsformen der Erfindung alternmativ oder zusätzlich auch an anderen Stellen angeordnet sein. In wiederum anderen Ausführungsformen der Erfindung befinden sich mehrere Kühleinrichtungen 8 innerhalb der Vorrichtung 1, sodass das Filament 7 beispielsweise nach jeder Düse und/oder nach der Beschichtungseinrichtung 2 gekühlt werden kann. Die Kühleinrichtung 8 kann in einigen Ausführungsformen der Erfindung einen kühlenden bzw. gekühlten Luftstrom bereitstellen, welcher Wärme sehr effizient aus dem Filament 7 austragen kann. Hierzu kann der Luftstrom eine Temperaturdifferenz zum Filament von etwa 100 K bis etwa 175 K oder von etwa 130 K bis etwa 150 K aufweisen.

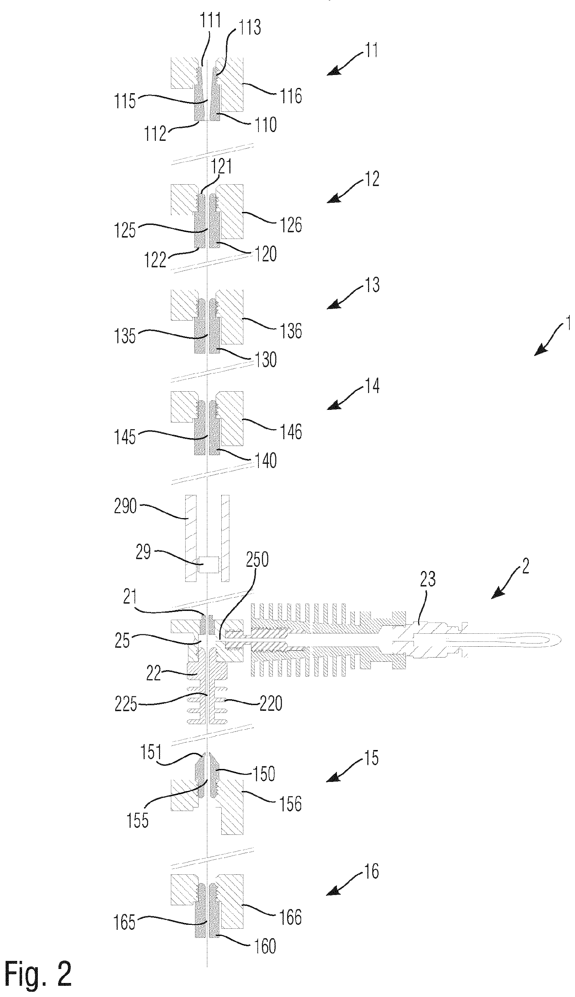

Anhand der Figur 2 wird der Aufbau und die Abfolge der zur Umformung und Nachverdichtung verwendeten Düsen in einem Ausführungsbeispiel erläutert. Dargestellt sind zunächst eine erste Düse 11, eine zweite Düse 12, eine dritte Düse 13 und eine vierte Düse 14, welche vom UD-Tape kontinuierlich durchlaufen werden. Die erste Düse 11 dient dabei der Umformung des flächigen UD-Tapes zu einem runden Filament. Die nachfolgenden zweiten, dritten und vierten Düsen dienen der Nachverdichtung, um die Qualität des Filamentes zu verbessern.

Die erste Düse 11 weist einen Düsenkörper 110 auf. Dieser besitzt ein erstes Ende 111, welches als Einlauf für das UD-Tape dient. Weiterhin besitzt der Düsenkörper 110 ein zweites Ende 112, durch welches das Filament austritt. Das erste Ende 111 und das zweite Ende 112 sind durch einen im Düsenkörper 110 ausgebildeten Kanal 115 miteinander verbunden. Im dargestellten Ausführungsbeispiel ist der Kanal 115 mit einem konischen Querschnitt versehen, d. h. die Querschnittsfläche verringert sich vom ersten Ende 111 zum zweiten Ende 112. Hierdurch kann ein vergleichsweise breites UD-Tape am ersten Ende 111 eingeführt werden, welches sodann im Verlauf der ersten Düse 11 aufgewickelt und damit zu einem im Wesentlichen runden Querschnitt umgeformt wird. Im dargestellten Ausführungsbeispiel beträgt der Durchmesser am ersten Ende 111 etwa 3,5 mm. Am zweiten Ende 112 beträgt der Durchmesser etwa 1,4 mm. Damit kann ein UD-Tape mit einer Breite von etwa 3 mm und einer Dicke von etwa 250 µm effizient umgeformt werden. In anderen Ausführungsformen der Erfindung kann der Durchmesser und der Konuswinkel an das jeweils umzuformende UD-Tape angepasst sein.

Zur Erwärmung des Matrixmaterials des UD-Tapes steht eine erste Heizeinrichtung 116 zur Verfügung, welche mit dem Düsenkörper 110 in leitfähigem Kontakt steht. Hierzu weist der Düsenkörper 110 am ersten Ende 111 ein Gewinde 113 auf, mit welchem er in die Heizeinrichtung 116 eingeschraubt werden kann. Die Heizeinrichtung 116 kann beispielsweise eine elektrische Heizung enthalten, welche eine einfache Temperaturregelung ermöglicht. Optional sind jedoch in anderen Ausführungsformen der Erfindung auch andere Heizeinrichtungen 116 möglich.

Das aus der ersten Düse 11 austretende Filament tritt in die zweite Düse 12 ein. Die zweite Düse 12 enthält ebenfalls einen Düsenkörper 120. Dieser weist ein erstes Ende 121 auf, welches als Einlauf gestaltet ist und ein zweites Ende 122, durch welche das Filament die zweite Düse 12 verlässt. Im Düsenkörper 120 ist ein Kanal 125 mit konstantem Querschnitt und einem Durchmesser von etwa 1,1 mm ausgeformt. Zur Erwärmung des Düsenkörpers 120 der zweiten Düse 12 steht eine zugeordnete zweite Heizeinrichtung 126 zur Verfügung. Auch diese Heizeinrichtung kann eine elektrische Heizeinrichtung sein bzw. eine solche enthalten, um den Düsenkörper 120 auf eine Temperatur zu erwärmen, welche eine effiziente Umformung des Filamentes ermöglicht, d. h. eine Erwärmung über die Erweichungstemperatur des zur Imprägnierung der Faserverstärkung verwendeten Polymers.

Das aus der zweiten Düse 12 austretende Filament tritt in eine optionale dritte Düse 133 ein. Die dritte Düse 13 enthält ebenfalls einen Düsenkörper 130. Dieser weist ein erstes Ende auf, welches als Einlauf gestaltet ist und ein zweites Ende, durch welche das Filament die dritte Düse 13 verlässt. Im Düsenkörper 130 ist ein Kanal 135 mit konstantem Querschnitt und einem Durchmesser von etwa 1,1 mm ausgeformt. Zur Erwärmung des Düsenkörpers 130 der dritten Düse 13 steht eine zugeordnete dritte Heizeinrichtung 136 zur Verfügung. Auch diese Heizeinrichtung kann eine elektrische Heizeinrichtung sein bzw. eine solche enthalten, um den Düsenkörper 130 auf eine Temperatur zu erwärmen, welche eine effiziente Umformung des Filamentes ermöglicht, d. h. eine Erwärmung über die Erweichungstemperatur des zur Imprägnierung der Faserverstärkung verwendeten Polymers.

Das aus der dritten Düse 13 austretende Filament tritt in eine optionale vierte Düse 14 ein. Die vierte Düse 14 enthält einen Düsenkörper 140. Dieser weist ein erstes Ende auf, welches als Einlauf gestaltet ist und ein zweites Ende, durch welche das Filament die vierte Düse 14 verlässt. Im Düsenkörper 140 ist ein Kanal 145 mit konstantem Querschnitt und einem Durchmesser von etwa 1,1 mm ausgeformt. Zur Erwärmung des Düsenkörpers 140 der vierten Düse 14 steht eine zugeordnete vierte Heizeinrichtung 146 zur Verfügung. Auch diese Heizeinrichtung kann eine elektrische Heizeinrichtung sein bzw. eine solche enthalten, um den Düsenkörper 140 auf eine Temperatur zu erwärmen, welche eine effiziente Umformung des Filamentes ermöglicht, d. h. eine Erwärmung über die Erweichungstemperatur des zur Imprägnierung der Faserverstärkung verwendeten Polymers.

Die zweite, dritte und vierte Düse 12, 13 und 14 sind dazu eingerichtet und bestimmt, das in der ersten Düse 11 umgeformte Filament auf optimale Packungsdichte zu verdichten. Fallweise kann die verwendete Anzahl größer oder geringer sein.

Weiterhin enthält die Vorrichtung 1 eine optionale Beschichtungseinrichtung 2. Die Beschichtungseinrichtung 2 enthält eine Eintrittsdüse 21, eine Beschichtungskammer 25 und eine Austrittsdüse 22. Die Querschnittsfläche der Beschichtungskammer 25 kann größer sein als die Querschnittsfläche der Ein- und Austrittsdüsen 21 und 22. Beispielsweise kann die Eintrittsdüse 21 einen Durchmesser von 1,1 mm haben und die Austrittsdüse 22 einen Durchmesser von 1,3 mm.

Der Beschichtungskammer 25 wird über einen seitlichen Einlass 250 ein verflüssigtes Polymer mittels einer Polymerzufuhreinrichtung 23 zugeführt. Die Polymerzufuhreinrichtung 23 kann ein zur thermoplastischen Matrix des UD-Tapes identisches oder kompatibles Polymer zuführen. Hierzu kann die Polymerzufuhreinrichtung zumindest eine Heizeinrichtung zur Erwärmung des Polymers und eine Fördereinrichtung enthalten, welche das Polymer unter Druck in die Beschichtungskammer 25 einführt. Auf diese Weise wird in der Beschichtungseinrichtung 2 ein Polymermantel mit einer Dicke von etwa 0,1 mm auf das Filament aufgebracht, welcher etwaige Faserreste umhüllt und die Einbettung beim späteren 3D-Druck verbessert.

Die Austrittsdüse 22 ist mit einer optionalen Wärmesenke 220 versehen. Im dargestellten Ausführungsbeispiel handelt es sich bei der Wärmesenke 220 um einen Kühlkörper, welcher innerhalb des Kanals 225 der Austrittsdüse 22 einen allmählichen Temperaturabfall sicherstellt, sodass ein Aufquellen des Polymers unterbunden und die Qualität des Filamentes verbessert wird.

Nach der Beschichtungseinrichtung 2 folgt eine optionale fünfte Düse 15, welche wiederum einen Düsenkörper 150 aufweist, in welchem ein Kanal 155 ausgebildet ist. Der Kanal weist einen konstanten Querschnitt von 1,3 mm auf. Auch die fünfte Düse 15 ist mit einer zugeordneten Heizeinrichtung 156 versehen, mit welcher der Düsenkörper 150 auf eine vorgebbare Temperatur gebracht werden kann. Am Einlauf 151 der fünften Düse 15 kann überschüssiges Polymer aus dem vorangegangenen Beschichtungsprozess abgestreift werden, um eine gleichmäßige Schichtdicke sicherzustellen.

Das aus der fünften Düse austretende Filament wird einer optionalen sechsten Düse zugeführt, welche ebenfalls mit einer Heizeinrichtung 166 versehen ist, welche den Düsenkörper 160 auf eine vorgebbare Temperatur bringt. Auch der Kanal 165 der sechsten Düse 16 weist einen Durchmesser von etwa 1,3 mm auf. Die optionale sechste Düse 16 dient zum Glätten der Oberfläche des Filamentes, sodass ein Filament mit höherer Qualität erhalten wird.

Die Heizeinrichtungen 116, 126, 136, 146, 156 und 166 sind einzeln und individuell regelbar, sowohl hinsichtlich der Temperatur als auch hinsichtlich der erzeugten Heizleistung. Hierdurch kann die Qualität des Filamentes verbessert sein, wenn über den gesamten Fertigungsprozess jeweils eine optimierte Temperatur an jeder Düse verwendet wird. In anderen Ausführungsformen der Erfindung können zwei oder mehrere Düsen mit einer gemeinsamen Heizeinrichtung versehen sein.

Vor der Beschichtungseinrichtung 2 befindet sich noch ein optionaler Filamentsensor 29, welcher in einem Halterohr 290 befestigt ist. Dieser dient der Regelung der Beschichtungseinrichtung 2 und/oder der Qualitätssicherung des so erzeugten Filamentes, sodass durch Optimierung der Betriebsparameter vorangegangener Stufen die Produktqualität des Filamentes verbessert werden kann.

Figur 3 zeigt eine alternative Ausführungsform einer ersten Düse 11. Gleiche Bestandteile sind mit gleichen Bezugszeichen versehen, sodass sich die nachfolgende Beschreibung auf die wesentlichen Unterschiede beschränkt. Die erste Düse 11 enthält einen Kanal 115 mit konstantem Querschnitt. Jedoch befindet sich am ersten Ende 111 ein verrundeter Einlauf mit einem Durchmesser von etwa 3,4 mm, sodass auch in diesem Fall ein vergleichsweise breites UD-Tape in die erste Düse eingeführt und dort zu einem runden Filament umgeformt werden kann.

Figur 4 zeigt sechs erfindungsgemäße Filamente im Querschnitt. Das Bild gemäß Figur 4 wurde mittels Computertomografie erhalten. Wie Figur 4 zeigt, bildet die Faserverstärkung 73 innerhalb des Querschnittes eines Filamentes 7 einen Ring, welcher einen Kern 74 aus thermoplastischem Matrixmaterial umgibt. Außerhalb der Faserverstärkung 73 zeigt sich ein Polymermantel 72, welcher mittels der Beschichtungseinrichtung 2 aufgebracht wurde.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Vorrichtung (1) zur Herstellung von Filamenten (7) mit vorgebbarem Querschnitt, welche zumindest eine Faserverstärkung (73) und eine thermoplastische Matrix (72, 74) enthalten,
wobei die Vorrichtung (1) eine erste Düse (11) mit einem ersten Querschnitt und einer zugeordneten ersten Heizeinrichtung (116) enthält, **dadurch gekennzeichnet, dass** die Vorrichtung zumindest eine zweite Düse (12) mit einem zweiten Querschnitt und einer zugeordneten zweiten Heizeinrichtung (126) und
zumindest eine Transporteinrichtung (3) enthält, welche dazu eingerichtet ist, ein vorimprägniertes UD-Tape (6) durch die erste und zweite Düse (11, 12) zu transportieren und dabei den Querschnitt des Filamentes (7) komplementär zum Querschnitt der jeweiligen Düse (11, 12) zu formen, wobei
die Vorrichtung (1) weiterhin zumindest eine Kühleinrichtung (8) enthält, welche zwischen der ersten Düse (11) und der zweiten Düse (12) angeordnet ist und welche dazu eingerichtet ist, Wärme aus dem Filament (7) abzuführen.

2. Vorrichtung nach Anspruch 1, **dadurch gekennzeichnet, dass** zumindest eine Düse (11) einen konischen Querschnittsverlauf aufweist und/oder
dass zumindest eine Düse (11) einen abgerundeten Einlauf (111) aufweist und/oder
dass die Querschnittsfläche der in Transportrichtung des Filamentes (7) gesehen vorderen Düse (11) größer ist als die Querschnittsfläche der in Transportrichtung des Filamentes gesehen hinteren Düse (12).

3. Vorrichtung nach Anspruch 1 oder 2, weiterhin enthaltend zumindest eine weitere Düse (13, 14, 15, 16) mit einer zugeordneten weiteren Heizeinrichtung (136, 146, 156, 166), welche in Transportrichtung des Filamentes (7) gesehen hinter der zweiten Düse (12) angeordnet ist.

4. Vorrichtung nach Anspruch 3, **dadurch gekennzeichnet, dass** die Vorrichtung zwischen 3 und 7 Düsen (11, 12, 13, 14, 15, 16) oder
zwischen 4 und 6 Düsen (11, 12, 13, 14, 15, 16) aufweist.

5. Vorrichtung nach einem der Ansprüche 1 bis 4, **dadurch gekennzeichnet, dass** die Transporteinrichtung (3) eine Wickelvorrichtung mit zumindest einer Spule (35) enthält oder daraus besteht, auf welche das aus der letzten Düse (15, 16) austretende Filament (7) aufwickelbar ist.

6. Vorrichtung nach einem der Ansprüche 1 bis 5, weiterhin enthaltend eine Beschichtungseinrichtung (2), welche eine Eintrittsdüse (21), eine Beschichtungskammer (25) und eine Austrittsdüse (22) enthält, welche dazu eingerichtet sind, vom Filament (7) der Reihe nach durchlaufen zu werden, wobei die Querschnittsfläche der Beschichtungskammer (25) größer ist als die Querschnittsfläche der Ein- und Austrittsdüsen (21, 22) und die Beschichtungseinrichtung weiterhin eine Polymerzufuhreinrichtung (23) enthält, welche dazu eingerichtet ist, der Beschichtungskammer (25) ein erwärmtes Polymer zuzuführen.

7. Vorrichtung nach Anspruch 6, **dadurch gekennzeichnet, dass** die Austrittsdüse (22) mit einer Wärmesenke (220) verbunden ist.

8. Vorrichtung nach einem der Ansprüche 1 bis 7, **dadurch gekennzeichnet, dass** die Heizeinrichtungen (116, 126, 136, 146, 156, 166) dazu eingerichtet sind, die Düsen (11, 12, 13, 14, 15, 16) jeweils auf eine Temperatur von etwa 90°C bis etwa 300°C oder von etwa 120°C bis etwa 270°C oder von etwa 120°C bis etwa 150°C oder von etwa 140°C bis etwa 170°C oder von etwa 230°C bis etwa 280°C oder von etwa 80°C bis etwa 120°C zu erwärmen.

9. Verfahren zur Herstellung von Filamenten mit vorgebbarem Querschnitt, welche zumindest eine Faserverstärkung (73) und eine thermoplastische Matrix (72, 74) enthalten, mit folgenden Schritten:
Bereitstellen eines vorimprägnierten UD-Tapes (6) mit einer Breite von etwa 0,5 mm bis etwa 3 mm und einer Dicke von etwa 20 µm bis etwa 300 µm, welches die Faserverstärkung (73) und die thermoplastische Matrix (74) enthält;
Umformen des UD-Tapes (6) zu dem Filament (7) mit vorgebbarem Querschnitt durch Einführen des UD-Tapes in eine erste Düse (11) mit einem ersten Querschnitt und einer zugeordneten ersten Heizeinrichtung (116);
Nachverdichten des Filamentes (7) durch Einführen in zumindest eine zweite Düse (12) mit einem zweiten Querschnitt und einer zugeordneten zweiten Heizeinrichtung (126), wobei
das Filament (7) durch zumindest eine Transporteinrichtung (3) durch die erste und zweite Düse (11, 12) transportiert wird und
zwischen der ersten Düse (11) und der zweiten Düse (12) mit zumindest einer Kühleinrichtung (8) Wärme aus dem Filament (7) abgeführt wird.

10. Verfahren nach Anspruch 9, **dadurch gekennzeichnet, dass** zumindest eine Düse (11) einen konischen
Querschnittsverlauf aufweist und/oder
dass zumindest eine Düse (11) einen abgerundeten Einlauf (111) aufweist und/oder
dass die Querschnittsfläche der in Transportrichtung des Filamentes (7) gesehen vorderen Düse (11) größer ist als die Querschnittsfläche der in Transportrichtung des Filamentes gesehen hinteren Düse (12).

11. Verfahren nach einem der Ansprüche 9 oder 10, **dadurch gekennzeichnet, dass** das Filament (7) nach der zweiten Düse (12) zumindest eine weitere Düse (13, 14, 15, 16) durchläuft und/oder
dass das Filament zwischen 3 und 7 Düsen (11, 12, 13, 14, 15, 16) oder
zwischen 4 und 6 Düsen (11, 12, 13, 14, 15, 16) durchläuft.

12. Verfahren nach einem der Ansprüche 9 bis 11, **dadurch gekennzeichnet, dass** die Transporteinrichtung (3) eine Wickelvorrichtung mit zumindest einer Spule (35) enthält oder daraus besteht, auf welche das aus der letzten Düse (15) austretende Filament (7) aufgewickelt wird.

13. Verfahren nach einem der Ansprüche 9 bis 12, **dadurch gekennzeichnet, dass** das Filament (7) eine Beschichtungseinrichtung (2) durchläuft, welche eine Eintrittsdüse (21), eine Beschichtungskammer (25) und eine Austrittsdüse (22) enthält, wobei die Querschnittsfläche der Beschichtungskammer (25) größer ist als die Querschnittsfläche der Ein- und Austrittsdüsen (21, 22) und der Beschichtungskammer (25) durch eine Polymerzufuhreinrichtung (23) ein erwärmtes Polymer zugeführt wird.

14. Verfahren nach einem der Ansprüche 9 bis 13, **dadurch gekennzeichnet, dass** die Düsen (11, 12, 13, 14, 15, 16) auf eine Temperatur von etwa 90°C bis etwa 300°C oder von etwa 120°C bis etwa 270°C oder von etwa 120°C bis etwa 150°C oder von etwa 140°C bis etwa 170°C oder von etwa 230°C bis etwa 280°C oder von etwa 80°C bis etwa 120°C erwärmt werden.

## Claims

1. Device (1) for producing filaments (7) with a specifiable cross-section, which contain at least one fiber reinforcement (73) and a thermoplastic matrix (72, 74),
the device (1) containing a first nozzle (11) with a first cross-section and an associated first heating unit (116), **characterized in that** the device contains at least one second nozzle (12) with a second cross-section and an associated second heating unit (126) and
at least one transport unit (3), which is designed to transport a pre-impregnated UD tape (6) through the first and second nozzles (11, 12) and in so doing shape the cross-section of the filament (7) so as to complement the cross-section of the respective nozzle (11, 12),
the device (1) additionally containing at least one cooling unit (8) which is arranged between the first nozzle (11) and the second nozzle (12) and which is designed to dissipate heat from the filament (7).

2. Device according to claim 1, **characterized in that** at least one nozzle (11) has a conical cross-sectional course and/or in that at least one nozzle (11) has a rounded inlet (111) and/or in that the cross-sectional area of the front nozzle (11) as seen in the direction of transport of the filament (7) is larger than the cross-sectional area of the rear nozzle (12) as seen in the direction of transport of the filament.

3. Device according to claim 1 or 2, additionally containing at least one further nozzle (13, 14, 15, 16) with an associated further heating unit (136, 146, 156, 166), which is arranged behind the second nozzle (12) as seen in the direction of transport of the filament (7).

4. Device according to claim 3, **characterized in that** the device has between 3 and 7 nozzles (11, 12, 13, 14, 15, 16) or
between 4 and 6 nozzles (11, 12, 13, 14, 15, 16).

5. Device according to any one of claims 1 to 4, **characterized in that** the transport unit (3) contains or consists of a winding device having at least one spool (35) onto which the filament (7) emerging from the last nozzle (15, 16) can be wound.

6. Device according to any one of claims 1 to 5, additionally containing a coating unit (2) which contains an inlet nozzle (21), a coating chamber (25) and an outlet nozzle (22), which are designed to run through by the filament (7) in sequence, the cross-sectional area of the coating chamber (25) being larger than the cross-sectional area of the inlet and outlet nozzles (21, 22), and the coating unit additionally containing a polymer supply unit (23) which is designed to supply a heated polymer to the coating chamber (25).

7. Device according to claim 6, **characterized in that** the outlet nozzle (22) is connected to a heat sink (220).

8. Device according to any one of claims 1 to 7, **characterized in that** the heating units (116, 126, 136, 146, 156, 166) are designed to heat each of the nozzles (11, 12, 13, 14, 15, 16) to a temperature from about 90°C to about 300°C or from about 120°C to about 270°C or from about 120°C to about 150°C or from about 140°C to about 170°C or from about 230°C to about 280°C or from about 80°C to about 120°C.

9. Method for producing filaments with a specifiable cross-section, which contain at least one fiber reinforcement (73) and a thermoplastic matrix (72, 74), comprising the following steps:
providing a pre-impregnated UD tape (6) having a width from about 0.5 mm to about 3 mm and a thickness from about 20 µm to about 300 µm, which contains the fiber reinforcement (73) and the thermoplastic matrix (74);
reshaping the UD tape (6) into the filament (7) with a specifiable cross-section by introducing the UD tape into a first nozzle (11) with a first cross-section and an associated first heating unit (116);
recompacting the filament (7) by introducing it into at least one second nozzle (12) with a second cross-section and an associated second heating unit (126),
the filament (7) being transported through the first and second nozzles (11, 12) by at least one transport unit (3) and
heat being dissipated from the filament (7) between the first nozzle (11) and the second nozzle (12) by means of at least one cooling unit (8).

10. Method according to claim 9, **characterized in that** at least one nozzle (11) has a conical cross-sectional course and/or in that at least one nozzle (11) has a rounded inlet (111) and/or in that the cross-sectional area of the front nozzle (11) as seen in the direction of transport of the filament (7) is larger than the cross-sectional area of the rear nozzle (12) as seen in the direction of transport of the filament.

11. Method according to any one of claims 9 or 10, **characterized in that** the filament (7) runs through at least one further nozzle (13, 14, 15, 16) after the second nozzle (12) and/or
**in that** the filament runs through 3 to 7 nozzles (11, 12, 13, 14, 15, 16) or 4 to 6 nozzles (11, 12, 13, 14, 15, 16).

12. Method according to any one of claims 9 to 11, **characterized in that** the transport unit (3) contains or consists of a winding device with at least one spool (35) onto which the filament (7) emerging from the last nozzle (15) is wound.

13. Method according to any one of claims 9 to 12, **characterized in that** the filament (7) runs through a coating unit (2) which contains an inlet nozzle (21), a coating chamber (25) and an outlet nozzle (22), the cross-sectional area of the coating chamber (25) being larger than the cross-sectional area of the inlet and outlet nozzles (21, 22) and a heated polymer being supplied to the coating chamber (25) by a polymer supply unit (23).

14. Method according to any one of claims 9 to 13, **characterized in that** the nozzles (11, 12, 13, 14, 15, 16) are heated to a temperature from about 90°C to about 300°C or from about 120°C to about 270°C or from about 120°C to about 150°C or from about 140°C to about 170°C or from about 230°C to about 280°C or from about 80°C to about 120°C.

## Revendications

1. Dispositif (1) de production de filaments (7) de section transversale prédéfinissable, qui contiennent au moins un renfort fibreux (73) et une matrice thermoplastique (72, 74),
le dispositif (1) comprenant au moins une première filière (11), ayant une première section transversale et un premier moyen de chauffage associé (116),
**caractérisé en ce que**
le dispositif comprend au moins une deuxième filière (12), ayant une deuxième section transversale et un deuxième moyen de chauffage associé (126), et au moins un moyen de transport (3) conçu pour transporter un ruban unidirectionnel préimprégné (6) à travers les première et deuxième filières (11, 12) en formant la section transversale du filament (7) de manière complémentaire à la section transversale de la filière respective (11, 12),
le dispositif (1) comprenant en outre au moins un moyen de refroidissement (8) qui est disposé entre la première filière (11) et la deuxième filière (12) et qui est conçu pour évacuer la chaleur du filament (7).

2. Dispositif selon la revendication 1,
**caractérisé en ce qu'**au moins une filière (11) présente un profil de section transversale conique, et/ou
**en ce qu'**au moins une filière (11) présente une entrée arrondie (111), et/ou en ce que la superficie en section transversale de la filière avant (11), vue dans la direction de transport du filament (7), est plus grande que la superficie en section transversale de la filière arrière (12), vue dans la direction de transport du filament.

3. Dispositif selon la revendication 1 ou 2,
comprenant en outre au moins une autre filière (13, 14, 15, 16) ayant un autre moyen de chauffage associé (136, 146, 156, 166), qui est disposée derrière la deuxième filière (12), vue dans la direction de transport du filament (7).

4. Dispositif selon la revendication 3,
**caractérisé en ce que** le dispositif comporte entre 3 et 7 filières (11, 12, 13, 14, 15, 16) ou entre 4 et 6 filières (11, 12, 13, 14, 15, 16).

5. Dispositif selon l'une des revendications 1 à 4,
**caractérisé en ce que** le moyen de transport (3) comprend ou est constitué d'un dispositif d'enroulement muni d'au moins une bobine (35) permettant d'enrouler le filament (7) qui sort de la dernière filière (15, 16).

6. Dispositif selon l'une des revendications 1 à 5,
comprenant en outre un moyen de revêtement (2) qui comprend une filière d'entrée (21), une chambre de revêtement (25) et une filière de sortie (22), qui sont conçues de manière à être traversées successivement par le filament (7), la superficie en section transversale de la chambre de revêtement (25) étant plus grande que la superficie en section transversale des filières d'entrée et de sortie (21, 22), et le moyen de revêtement comprenant en outre un moyen d'alimentation en polymère (23) qui est conçu pour alimenter la chambre de revêtement (25) en polymère chauffé.

7. Dispositif selon la revendication 6,
**caractérisé en ce que** la filière de sortie (22) est reliée à un dissipateur thermique (220).

8. Dispositif selon l'une des revendications 1 à 7,
**caractérisé en ce que** les moyens de chauffage (116, 126, 136, 146, 156, 166) sont conçus pour chauffer les filières (11, 12, 13, 14, 15, 16) à une température d'environ 90 °C à environ 300 °C, ou d'environ 120 °C à environ 270 °C, ou d'environ 120 °C à environ 150 °C, ou d'environ 140 °C à environ 170 °C, ou d'environ 230 °C à environ 280 °C, ou d'environ 80 °C à environ 120 °C.

9. Procédé de production de filaments de section transversale prédéfinissable, qui contiennent au moins un renfort fibreux (73) et une matrice thermoplastique (72, 74), comprenant les étapes suivantes consistant à :
fournir un ruban unidirectionnel préimprégné (6) d'une largeur d'environ 0,5 mm à environ 3 mm et d'une épaisseur d'environ 20 µm à environ 300 µm, qui contient le renfort fibreux (73) et la matrice thermoplastique (74) ;
transformer le ruban unidirectionnel (6) en filament (7) de section transversale prédéfinissable en introduisant le ruban unidirectionnel dans une première filière (11) ayant une première section transversale et un premier moyen de chauffage associé (116) ;
post-compacter le filament (7) en l'introduisant dans au moins une deuxième filière (12) ayant une deuxième section transversale et un deuxième moyen de chauffage associé (126),
le filament (7) étant transporté à travers les première et deuxième filières (11, 12) par au moins un moyen de transport (3), et
la chaleur étant évacuée du filament (7) entre la première filière (11) et la deuxième filière (12) à l'aide d'au moins un moyen de refroidissement (8).

10. Procédé selon la revendication 9,
**caractérisé en ce qu'**au moins une filière (11) présente un profil de section transversale conique, et/ou
**en ce qu'**au moins une filière (11) présente une entrée arrondie (111), et/ou
**en ce que** la superficie en section transversale de la filière avant (11), vue dans la direction de transport du filament (7), est plus grande que la superficie en section transversale de la filière arrière (12), vue dans la direction de transport du filament.

11. Procédé selon l'une des revendications 9 ou 10,
**caractérisé en ce que** le filament (7) traverse au moins une autre filière (13, 14, 15, 16) après la deuxième filière (12), et/ou
**en ce que** le filament traverse entre 3 et 7 filières (11, 12, 13, 14, 15, 16) ou entre 4 et 6 filières (11, 12, 13, 14, 15, 16).

12. Procédé selon l'une des revendications 9 à 11,
**caractérisé en ce que** le moyen de transport (3) comprend ou est constitué d'un dispositif d'enroulement muni d'au moins une bobine (35) permettant d'enrouler le filament (7) qui sort de la dernière filière (15).

13. Procédé selon l'une des revendications 9 à 12,
**caractérisé en ce que** le filament (7) traverse un moyen de revêtement (2) qui comprend une filière d'entrée (21), une chambre de revêtement (25) et une filière de sortie (22), la superficie en section transversale de la chambre de revêtement (25) étant plus grande que la superficie en section transversale des filières d'entrée et de sortie (21, 22), et la chambre de revêtement (25) étant alimentée en polymère chauffé par un moyen d'alimentation en polymère (23).

14. Procédé selon l'une des revendications 9 à 13,
**caractérisé en ce que** les filières (11, 12, 13, 14, 15, 16) sont chauffées à une température d'environ 90 °C à environ 300 °C ou d'environ 120 °C à environ 270 °C ou d'environ 120 °C à environ 150 °C ou d'environ 140 °C à environ 170 °C ou d'environ 230 °C à environ 280 °C ou d'environ 80°C à environ 120 °C.
